# EUROPEAN PATENT SPECIFICATION

(11) **EP 2 541 779 B1**
(45) Date of publication and mention of the grant of the patent: **15.04.2015**
(21) Application number: 12184414.6
(22) Date of filing: 30.06.2010
(51) Int. Cl.: H04B 1/00, H04W 88/08

(54) **Apparatus and Method for Sharing Antenna and Feeder**
Vorrichtung und Verfahren zur gemeinsamen Nutzung einer Antenne und eines Speisers
Appareil et procédé de partage d'antenne et d'un dispositif d'alimentation

(30) Priority: 30.06.2009 CN 200910108544
(43) Date of publication of application: 02.01.2013
(62) Divisional of application: 10167814.2
(73) Proprietor: Huawei Technologies Co., Ltd., Longgang District Shenzhen, Guangdong 518129 (CN)
(72) Inventor: Yue, Ling, 518129 Shenzhen (CN); Cai, Dantao, 518129 Shenzhen (CN); Zhou, Taoyuan, 518129 Shenzhen (CN); Meng, Zhixiao, 518129 Shenzhen (CN)
(74) Representative: Isarpatent

(56) References cited:
- EP-A1- 1 294 045
- WO-A1-2007/111545
- WO-A1-2008/128403
- CN-A- 101 459 986

## Description

### Field of the Invention

The present invention relates to the field of communications technologies, and in particular, to an apparatus and method for sharing antenna and feeder.

### Background of the Invention

With the development of radio communications, radio spectrum resources become scarce, and more and more spectrums are used in radio communications. Thus, multiple frequency bands inevitably coexist. However, due to the shortage of space resources, multiple base stations may generally share a set of antenna and feeder system to improve the utilization efficiency of the antenna and reduce costs. In this way, an antenna sharing unit (ASU) needs to be added between the antenna and feeder system and antenna interfaces of multiple base stations. The ASU combines the transmit signals of multiple base stations, and outputs the combined signal to the antenna and feeder system, or divides multiple signals received from the antenna and feeder system, and sends the divided signals to corresponding base stations for processing.

In the prior art, a 3 dB bridge is adopted for implementing the antenna and feeder sharing. For example, a signal received by the antenna and feeder is divided into two signals by the 3 dB bridge, and these signals are sent to the transceiver interfaces of two base stations; the signals sent by the two base stations through their respective transceiver interfaces are combined by the 3 dB bridge and then sent through the antenna and feeder. In this way, two transceiver interfaces share the same antenna and feeder. Similarly, if the two base stations that share the antenna and feeder have a diversity receiving interface, an antenna and a 3 dB bridge may be added to implement diversity receiving through antenna and feeder sharing.

The inventor of the present invention discovers the following problems in the prior art: An additional ASU is needed, which occupies a certain space resources; a lot of feeders are needed, which increases costs and construction difficulty.

Document CN101459986 & WO2010/072173 recite a method for receiving signals in an overlay network and a corresponding overlay network system and apparatus.

### Summary of the Invention

Embodiments of the present invention provide an apparatus, system and method for sharing antenna and feeder, so that the base stations can share the antenna and feeder.

An apparatus for sharing antenna and feeder in an embodiment of the present invention includes a first frequency selecting unit, a second frequency selecting unit, a first communication port, a second communication port, and a third communication port.
the first frequency selecting unit is connected between the first communication port and the second communication port in series, and is configured to filter signals transmitted between the first communication port and the second communication port according to a first passband range;
the second frequency selecting unit is connected between the first communication port and the third communication port in series, and is configured to filter signals transmitted between the first communication port and the third communication port according to a second passband range;
the first communication port is configured to connect a first antenna interface of the first base station; the second communication port is configured to connect a receiver of the first base station; the third communication port is configured to connect a first antenna and feeder sharing interface of the first base station; the first antenna and feeder sharing interface is configured to connect a first antenna interface of a second base station; and
the first passband range covers a receiving frequency of the first base station, the second passband range covers a transceiving frequency of the second base station, and the first passband range and the second passband range are not overlapped.

A base station in an embodiment of the present invention includes the preceding apparatus for sharing antenna and feeder, where, the base station is the prceding first base station.

A system for sharing antenna and feeder in an embodiment of the present invention includes: a second base station and the preceding first base station. The first antenna and feeder sharing interface of the first base station is connected to the first antenna interface of the second base station.

A method for sharing antenna and feeder in an embodiment of the present invention includes:
receiving a first signal from a first antenna interface of a first base station;
filtering the first signal according to a first passband range and a second passband range, and forming a second signal and a third signal; and
sending the second signal to a receiver of the first base station and the third signal to a first antenna and feeder sharing interface of the first base station, and sending the third signal to a first antenna interface of a second base station through the first antenna and feeder sharing interface;
where the first passband range covers a receiving frequency of the first base station, the second passband range covers a transceiving frequency of the second base station, and the first passband range and the second passband range are not overlapped.

In embodiments of the present invention, frequency selecting units that cover the transceiving frequencies of other base stations and corresponding antenna and feeder sharing interfaces are set in a base station. In this way, these base stations can share the antennas and feeders without using additional antenna sharing units (ASUs), and thus the feeders are saved and the construction difficulty is lowered.

### Brief Description of the Drawings

FIG. 1 is a schematic diagram illustrating an apparatus for sharing antenna and feeder in an embodiment of the present invention;
FIG. 2 is a schematic diagram illustrating another apparatus for sharing antenna and feeder in an embodiment of the present invention;
FIG. 3 is a schematic diagram illustrating another apparatus for sharing antenna and feeder in an embodiment of the present invention;
FIG. 4 is a schematic diagram illustrating a system for sharing antenna and feeder in an embodiment of the present invention;
FIG. 5 is a schematic diagram illustrating another system for sharing antenna and feeder in an embodiment of the present invention;
FIG. 6 is a schematic diagram illustrating another system for sharing antenna and feeder in an embodiment of the present invention;
FIG. 7 is a schematic diagram illustrating another system for sharing antenna and feeder in an embodiment of the present invention; and
FIG. 8 is a flowchart of a method for sharing antenna and feeder in an embodiment of the present invention.

### Detailed Description of the Embodiments

Embodiments of the present invention provide an apparatus, system and method for sharing antenna and feeder. In embodiments of the present invention, frequency selecting units that cover the transceiving frequencies of other base stations and corresponding antenna and feeder sharing interfaces are set in a base station. In this way, these base stations can share the antennas without using additional ASUs, and thus the feeders are saved and the construction difficulty is lowered. For better understanding of the technical solution and merits of the present invention, the present invention is hereinafter described in detail with reference to the accompanying drawings.

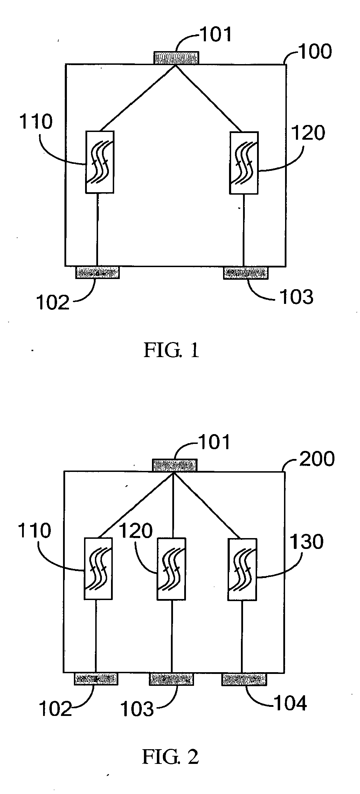

As shown in FIG. 1, an apparatus 100 for sharing antenna and feeder in an embodiment of the present invention is located inside the first base station and includes: a first frequency selecting unit 110, a second frequency selecting unit 120, a first communication port 101, a second communication port 102, and a third communication port 103.

The first frequency selecting unit 110 is connected between the first communication port 101 and the second communication port 102 in series, and is configured to filter signals transmitted between the first communication port 101 and the second communication port 102 according to a first passband range.

The second frequency selecting unit 120 is connected between the first communication port 101 and the third communication port 103 in series, and is configured to filter signals transmitted between the first communication port 101 and the third communication port 103 according to a second passband range.

The first communication port 101 is configured to connect a first antenna interface of the first base station; the second communication port 102 is configured to connect a receiver of the first base station; the third communication port 103 is configured to connect a first antenna and feeder sharing interface of the first base station; and the first antenna and feeder sharing interface is configured to connect a first antenna interface of a second base station.

The first passband range covers a receiving frequency of the first base station, the second passband range covers a transceiving frequency of the second base station; and the first passband range and the second passband range are not overlapped.
FIG. 2 illustrates an apparatus 200 for sharing antenna and feeder in an embodiment of the present invention. Compared with the apparatus 100 for sharing antenna and feeder in FIG. 1, the apparatus 200 for sharing antenna and feeder further includes a third frequency selecting unit and a fourth communication port.

The fourth communication port 104 is configured to connect the transmitter of the first base station.

The third frequency selecting unit 130 is connected between the first communication port 101 and the fourth communication port 104 in series, and is configured to filter signals transmitted between the first communication port 101 and the fourth communication port 104 according to a third passband range.

The third passband range covers a transmitting frequency of the first base station, and the third passband range, the first passband range, and the second passband range are not mutually overlapped.

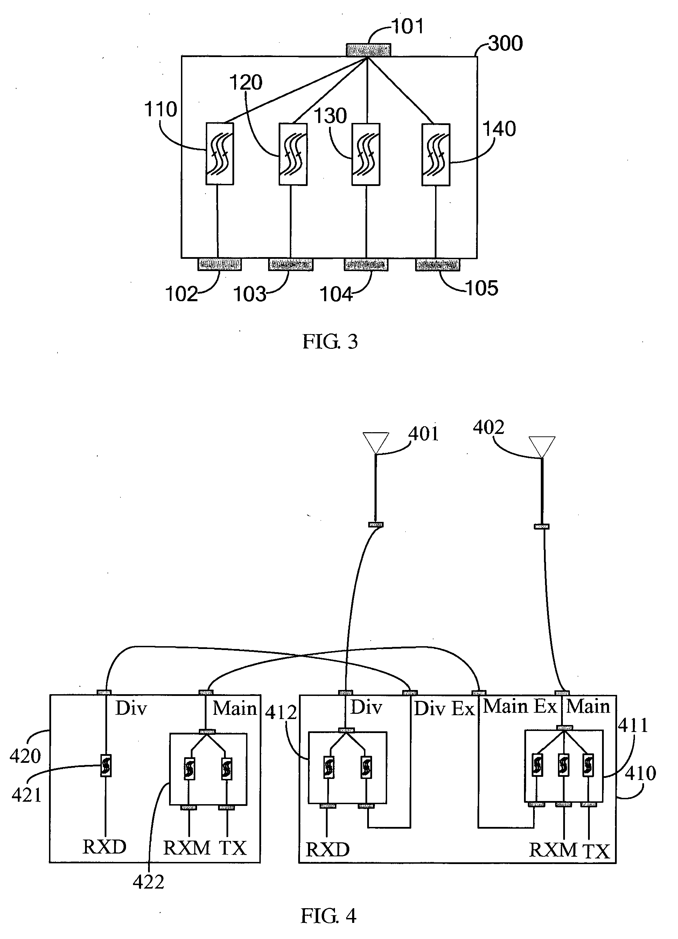

FIG. 3 illustrates an apparatus A 300 for sharing antenna and feeder in an embodiment of the present invention. Compared with the apparatus 200 for sharing antenna and feeder, the apparatus A 300 for sharing antenna and feeder further includes a fourth frequency selecting unit 140 and a fifth communication port 105.

The fifth communication port 105 is configured to connect a second antenna and feeder sharing interface of the first base station, where the second antenna and feeder sharing interface is configured to connect a first antenna interface of a third base station.

The fourth frequency selecting unit 140 is connected between the first communication port 101 and the fifth communication port 105 in series, and is configured to filter signals transmitted between the first communication port 101 and the fifth communication port 105 according to a fourth passband range.

The fourth passband range covers a transceiving frequency of the third base station, and the fourth passband range, the first passband range, the second passband range, and the third passband range are not mutually overlapped.

Certainly, on the basis of the embodiment shown in FIG. 1, a fourth frequency selecting unit 140 and a fifth communication port 105 may be added to form an apparatus B for sharing antenna and feeder. The fifth communication port 105 is configured to connect a second antenna and feeder sharing interface of the first base station, and the second antenna and feeder sharing interface is configured to connect a first antenna interface of a third base station.

The fourth frequency selecting unit 140 is connected between the first communication port 101 and the fifth communication port 105 in series, and is configured to filter signals transmitted between the first communication port 101 and the fifth communication port 105 according to a fourth passband range.

The fourth passband range covers a transceiving frequency of the third base station, and the fourth passband rang, the first passband range, and the second passband range are not mutually overlapped.

The preceding frequency selecting unit may be a filter or a notch filter.

As shown in FIG. 4, a system for sharing antenna and feeder in an embodiment of the present invention includes a first base station 410 and a second base station 420.

The first base station 410 includes the apparatus 412 for sharing antenna and feeder shown in FIG. 1. In apparatus 412, a first communication port of apparatus 412 is configured to connect a first antenna interface Div of the first base station 410; a second communication port of apparatus 412 is configured to connect a receiver RXD of the first base station 410; a third communication port of apparatus 412 is configured to connect a first antenna and feeder sharing interface Div Ex of the first base station 410; where the first antenna and feeder sharing interface Div Ex is configured to connect a first antenna interface Div of the second base station 420; a first frequency selecting unit of apparatus 412 is connected between the first communication port and the second communication port in series and configured to filter signals transmitted between the first communication port and the second communication port according to a first passband range; a second frequency selecting unit of apparatus 412 is connected between the first communication port and the third communication port in series and configured to filter signals transmitted between the first communication port and the third communication port according to a second passband range; the first passband range covers the receiving frequency of the first base station, the second passband range covers the transceiving frequency of the second base station, and the first passband range and the second passband range are not mutually overlapped. In this way, the first base station 410 and the second base station 420 can share the antenna and feeder.

To implement the main and diversity receiving of the second base station 420, the first base station 410 may further includes the apparatus 411 for sharing antenna and feeder shown in FIG. 2. Compared with the apparatus 412 for sharing antenna and feeder, the apparatus 411 for sharing antenna and feeder further includes a third frequency selecting unit and a fourth communication port that are configured to connect a transmitter TX of the first base station 410. In the apparatus 411 for sharing antenna and feeder, the third frequency selecting unit is connected between the first communication port and the fourth communication port in series and configured to filter signals transmitted between the first communication port and the fourth communication port according to a third passband range, where the third passband range covers the transmitting frequency of the first base station 410, and the third passband range, the first passband range, and the second passband range are not mutually overlapped; the first communication port of apparatus 411 is configured to connect a second antenna interface Main of the first base station 410; the second communication port of apparatus 411 is configured to connect a main receiver RXM of the first base station 410; the third communication port of apparatus 411 is configured to connect the second antenna and feeder sharing interface Main Ex of the first base station 410, where the second antenna and feeder sharing interface Main Ex is configured to connect a second antenna interface Main of the second base station 420.

In the first base station 410 provided in this embodiment, the first antenna interface Div is a diversity receiving antenna interface and configured to connect antenna D; the second antenna interface Main is a main transceiving antenna interface and configured to connect antenna M; the receiver RXD is a diversity receiver; the receiver RXM is a main receiver, where antenna D and antenna M may be wideband antennas.

In the second base station 420 provided in this embodiment, the first antenna interface Div is a diversity receiving antenna interface and is connected to the diversity receiving RXD through a receiving filter 421 inside the base station; the second antenna interface Main is the main transceiving antenna interface and is connected to the main receiver and transmitter through a duplexer 422 inside the base station.

In this embodiment, the first base station 410 and the second base station 420 may have different frequency bands. For example, the first base station 410 uses a 2100 MHz frequency band, with the receiving frequency ranging from 1920 MHz to 1980 MHz and the transmitting frequency from 2110 MHz to 2170 MHz; the second base station 420 uses an 800 MHz frequency band, with the receiving frequency ranging from 824 MHz to 849 MHz and the transmitting frequency from 869 MHz to 895 MHz. The first passband range covers the receiving frequency 1920 MHz to 1980 MHz of the first base station 410; the second passband range covers the transceiving frequency ranging from 824 MHz to 895 MHz of the second base station 420; the third passband range covers the transmitting frequency ranging from 2110 MHz to 2170 MHz of the first base station 410.

The following describes the principles for diversity receiving by sharing antenna and feeder between the first base station 410 and the second base station 420: After receiving a signal from antenna M, the apparatus 411 for sharing antenna and feeder forms two parts of signals according to the first passband range and the second passband range, where the signal ranging from 1920 MHz to 1980 MHz is sent to the receiver RXM of the first base station 410 as the main receiving signal of the first base station 410, and the signal ranging from 824 MHz to 849 MHz is sent through the second antenna and feeder sharing interface Main Ex to the second antenna interface Main of the second base station 420 as the main receiving signal of the second base station 420, and then enters the receiver RXM of the second base station 420 through the duplexer 422; the transmitter TX of the first base station 410 sends a signal ranging from 2110 MHz to 2170 MHz; after being filtered by the apparatus 411 for sharing antenna and feeder according to the third passband range, this filtered signal is sent to antenna M through the second antenna interface Main; the transmitter TX of the second base station 420 sends a signal ranging from 869 MHz to 895 MHz through the duplexer 422, the second antenna interface Main and the second antenna and feeder sharing interface Main Ex; after being filtered by the apparatus 411 for sharing antenna and feeder according to the second passband range, this signal is sent to antenna M through the second antenna interface Main; after receiving the signal from antenna D, the apparatus 412 for sharing antenna and feeder forms two parts of signals according to the first passband range and the second passband range, where the signal ranging from 1920 MHz to 1980 MHz is sent to the receiver RXD of the first base station 410 as the diversity receiving signal of the first base station 410, and the signal ranging from 824 MHz to 849 MHz is sent through the first antenna and feeder sharing interface Div Ex to the first antenna interface Div of the second base station 420 as the diversity receiving signal of the second base station 420; after being filtered by the filter 421, the filtered signal enters the receiver RXD of the second base station 420 .

In this embodiment, the frequency selecting unit in the apparatus 412 for sharing antenna and feeder and the apparatus 411 for sharing antenna and feeder may be a filter or a notch filter, especially a bandpass filter or a bandpass notch filter. The second frequency selecting unit in the apparatus 412 for sharing antenna and feeder and the apparatus 411 for sharing antenna and feeder may be a low pass filter or a low pass notch filter so as to make it easier to implement the solution.

In this embodiment, the apparatus for sharing antenna and feeder is set in a base station to cover the transceiving frequencies of other base stations; the antenna and feeder sharing interface is used, so that the base station and other base stations can share antenna and feeder resources without using additional ASUs, and thus feeders are saved and the construction difficulty is lowered. In addition, the apparatus for sharing antenna and feeder replaces the original duplexer in the base station, which reduces the cost in the construction of the system for sharing antenna and feeder.

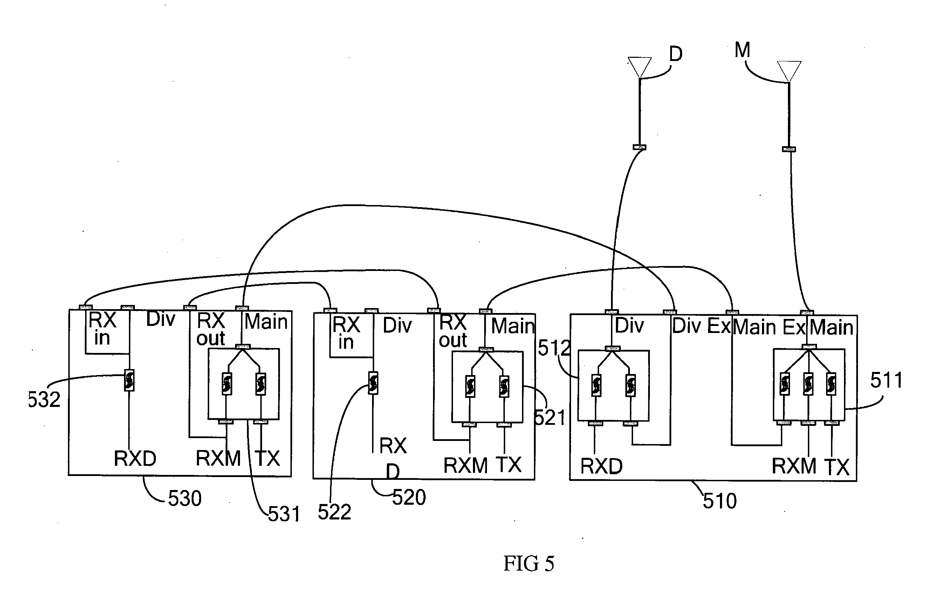

As shown in FIG. 5, another system for sharing antenna and feeder in an embodiment of the present invention includes a first base station 510, a second base station 520, and a third base station 530. The first base station 510 has the same structure as the first base station 410 shown in FIG. 4, and is not further described.

On the basis of the second base station 420 shown in FIG. 4, the second base station 520 further includes a co-frequency sharing receiving interface RX in and a co-frequency sharing transmitting interface RX out to implement the cabinet combining function of the base stations in the same frequency band. The third base station 530 has the same structure as the second base station 520, and is not further described.

In this embodiment, the first base station 510 uses a 2100 MHz frequency band, with the receiving frequency ranging from 1920 MHz to 1980 MHz and the transmitting frequency from 2110 MHz to 2170 MHz. The second base station 520 and the third base station 530 use an 800 MHz frequency band, with the receiving frequency ranging from 824 MHz to 849 MHz and the transmitting frequency from 869 MHz to 895 MHz. For the apparatus for sharing antenna and feeder, the first passband range covers the receiving frequency ranging from 1920 MHz to 1980 MHz; the second passband range covers the transceiving frequency ranging from 824 MHz to 895 MHz; the third passband range covers the transmitting frequency ranging from 2110 MHz to 2170 MHz.

The following describes the principles for diversity receiving by sharing antenna and feeder between the first base station 510, the second base station 520, and the third base station 530: After receiving a signal from antenna M, the apparatus 511 for sharing antenna and feeder forms two parts of signals according to the first passband range and the second passband range, where the signal ranging from 1920 MHz to 1980 MHz is sent to the receiver RXM of the first base station 510 as the main receiving signal of the first base station 510, and the signal ranging from 824 MHz to 849 MHz is sent through the second antenna and feeder sharing interface Main Ex to the second antenna interface Main of the second base station 520 as the main receiving signal of the second base station 520, and then enters the receiver RXM of the second base station 520 through the duplexer 521; the transmitter TX of the first base station 510 sends a signal ranging from 2110 MHz to 2170 MHz; after being filtered by the apparatus 511 for sharing antenna and feeder according to the third passband range, this filtered signal is sent to antenna M through the second antenna interface Main; the transmitter TX of the second base station 520 sends a signal ranging from 869 MHz to 895 MHz through the duplexer 521, the second antenna interface Main, and the second antenna and feeder sharing interface Main Ex; after being filtered by the apparatus 511 for sharing antenna and feeder according to the second passband range, this filtered signal is sent to antenna M through the second antenna interface Main; after receiving the signal from antenna D, the apparatus 512 for sharing antenna and feeder forms two parts of signals according to the first passband range and the second passband range, where the signal ranging from 1920 MHz to 1980 MHz is sent to the receiver RXD of the first base station 510 as the diversity receiving signal of the first base station 510, and the signal ranging from 824 MHz to 849 MHz is sent through the first antenna and feeder sharing interface Div Ex to the second antenna interface Main of the third base station 530 as the main receiving signal of the third base station 530, and then enters the receiver RXM of the third base station 530 through the duplexer 531; the transmitter TX of the third base station 530 sends a signal ranging from 869 MHz to 895 MHz through the duplexer 531, the second antenna interface Main, and the first antenna and feeder sharing interface Div Ex; after being filtered by the apparatus 512 for sharing antenna and feeder according to the second passband range, this filtered signal is sent to antenna D through the first antenna interface Div. The second base station 520 sends the signal that the duplexer 521 outputs to the receiver RXM to the co-frequency sharing receiving interface RX in of the third base station 530 through co-frequency sharing transmitting interface RX out as the diversity receiving signal of the third base station 530; after being filtered by the filter 532, this filtered signal is sent to the receiver RXD of the third base station 530. Similarly, the third base station 530 sends the signal that the duplexer 531 outputs to the receiver RXM to the co-frequency sharing receiving interface RX in of the second base station 520 through co-frequency sharing transmitting interface RX out as the diversity receiving signal of the second base station 520; after being filtered by the filter 522, this signal is sent to the receiver RXD of the second base station 520.

In this embodiment, a co-frequency sharing transceiver interface is set in the second base station 520 and the third base station 530 to implement the cabinet combining between the base stations of the same frequency. Compared with the embodiment shown in FIG. 4, this embodiment increases the number of base stations that share antenna and feeder, and reduces the cost in the construction of the system for sharing antenna and feeder. It is understandable that a similar co-frequency sharing transceiver interface may be set in the first base station 510 to further increase the number of base stations that share antennas and feeders.

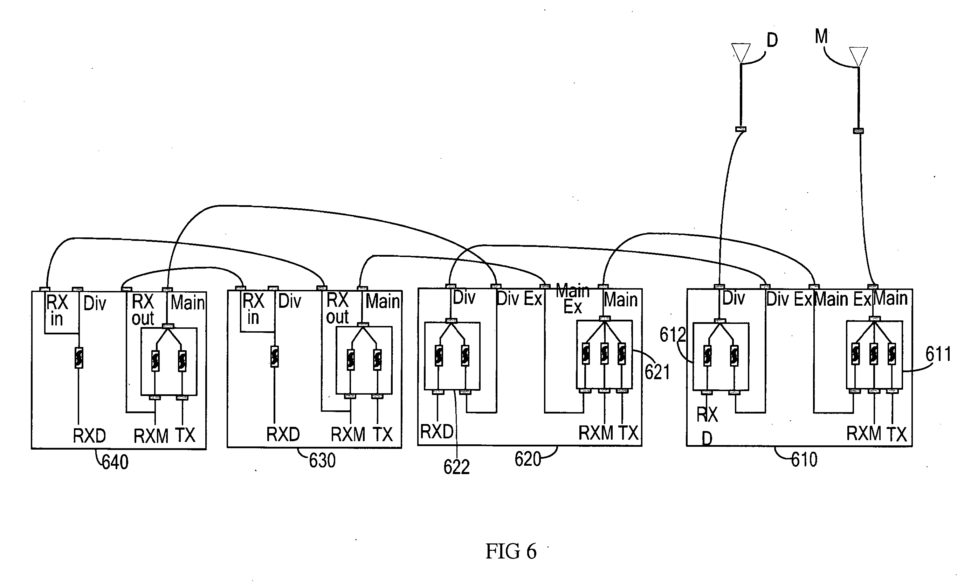

As shown in FIG. 6, another system for sharing antenna and feeder in an embodiment of the present invention includes a first base station 610, a second base station 620, a third base station 630, and a fourth base station 640. The first base station 610 and the second base station 620 have the same structure as the first base station 410 shown in FIG. 4, and the third base station 630 and the fourth base station 640 have the same structure as the second base station 520 shown in FIG. 5.

In this embodiment, the first base station 610 uses a 2600 MHz frequency band, with the receiving frequency ranging from 2500 MHz to 2570 MHz and the transmitting frequency from 2620 MHz to 2690 MHz; the second base station 620 uses a 2100 MHz frequency band, with the receiving frequency ranging from 1920 MHz to 1980 MHz and the transmitting frequency from 2110 MHz to 2170 MHz. The third base station 630 and the fourth base station 640 use an 800 MHz frequency band, with the receiving frequency ranging from 824 MHz to 849 MHz and the transmitting frequency from 869 MHz to 895 MHz. For the apparatus for sharing antenna and feeder in the first base station 610, the first passband range covers the receiving frequency ranging from 2500 MHz to 2570 MHz; the second passband range covers the transceiving frequency ranging from 824 MHz to 2170 MHz (that is, it covers the transceiving frequencies of the second base station 620, the third base station 630, and the fourth base station 640); the third passband range covers the transmitting frequency ranging from 2620 MHz to 2690 MHz. For the apparatus for sharing antenna and feeder in the second base station 620, the first passband range covers the receiving frequency ranging from 1920 MHz to 1980 MHz; the second passband range covers the transceiving frequency ranging from 824 MHz to 895 MHz; the third passband range covers the transmitting frequency ranging from 2110 MHz to 2170 MHz.

The second base station 620, the third base station 630, and the fourth base station 640 are connected in the same way as that shown in FIG. 5. The difference between this embodiment and the embodiment shown in FIG. 5 is as follows: The first antenna interface Div of the second base station 620 is connected to the first antenna and feeder sharing interface Div Ex of the first base station 610; the second antenna interface Main of the second base station 620 is connected to the second antenna and feeder sharing interface Main Ex of the first base station 610; the first antenna interface Div of the first base station 610 is connected to antenna D; the second antenna interface Main of the first base station 610 is connected to antenna M.

After receiving a signal from antenna M, the apparatus 611 for sharing antenna and feeder forms two parts of signals according to the first passband range and the second passband range, where the signal ranging from 2500 MHz to 2570 MHz is sent to the receiver RXM of the first base station 610 as the main receiving signal of the first base station 610, and the signal ranging from 824 MHz to 2170 MHz is sent through the second antenna and feeder sharing interface Main Ex to the second antenna interface Main of the second base station 620 as the main receiving signal of the second base station 620, and enters the apparatus 621 for sharing antenna and feeder. The way in which the apparatus 621 for sharing antenna and feeder processes the signal is similar to that shown in FIG. 5, and is not further described. The transmitter TX of the first base station 610 sends a signal ranging from 2620 MHz to 2690 MHz; after being filtered by the apparatus 611 for sharing antenna and feeder according to the third passband range, this filtered signal is sent to antenna M through the second antenna interface Main; a signal ranging from 824 MHz to 2170 MHz (including the transmitting signal of the second base station 620 and the third base station 630) from the second antenna interface Main of the second base station 620 is sent to the apparatus 611 for sharing antenna and feeder through the second antenna and feeder sharing interface Main Ex of the first base station 610; the apparatus 611 for sharing antenna and feeder filters this signal according to the second passband range, and sends this filtered signal to antenna M through the second antenna interface Main. The way in which the apparatus 612 for sharing antenna and feeder and the apparatus 622 for sharing antenna and feeder process the signal is similar to the preceding one, and is not further described.

In this embodiment, base stations including apparatuses for sharing antenna and feeder in different frequency bands are connected in series; the passband ranges of the apparatuses for sharing antenna and feeder are set accordingly. In this way, the base stations share antennas and feeders, and thus the number of base stations sharing antennas and feeders in different frequency bands is increased and the costs for the construction of the system for sharing antenna and feeder are reduced.

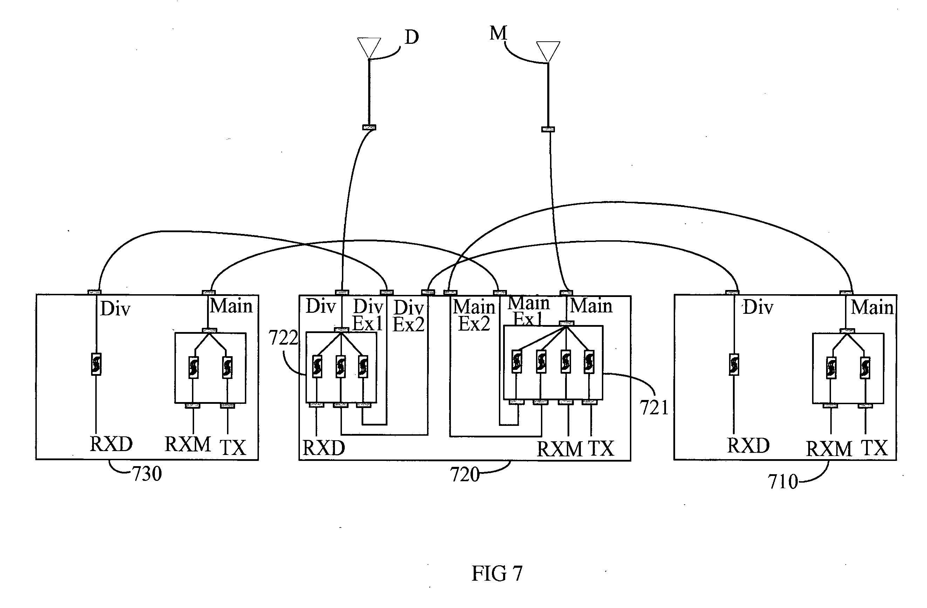

As shown in FIG. 7, another system for sharing antenna and feeder in an embodiment of the present invention includes a first base station 720, a second base station 730, and a third base station 710. The first base station 720 includes an apparatus 721 for sharing antenna and feeder and an apparatus 722 for sharing antenna and feeder. The apparatus 721 for sharing antenna has the same structure as the apparatus A for sharing antenna and feeder shown in FIG. 3, and the apparatus 722 for sharing antenna has the same structure as the apparatus B for sharing antenna and feeder shown in FIG. 3. The second base station 730 and the third base station 710 have the same structure as the second base station 420 shown in FIG. 4, and are not further described.

In this embodiment, the first base station 720 uses a 2600 MHz frequency band, with the receiving frequency ranging from 2500 MHz to 2570 MHz and the transmitting frequency from 2620 MHz to 2690 MHz. The second base station 730 uses a 2100 MHz frequency band, with the receiving frequency ranging from 1920 MHz to 1980 MHz and the transmitting frequency from 2110 MHz to 2170 MHz. The third base station 710 uses an 800 MHz frequency band, with the receiving frequency ranging from 824 MHz to 849 MHz and the transmitting frequency from 869 MHz to 895 MHz. For the apparatus for sharing antenna and feeder in the first base station 720, the first passband range covers the receiving frequency ranging from 2500 MHz to 2570 MHz; the second passband range covers the transceiving frequency ranging from 824 MHz to 895 MHz; the third passband range covers the transmitting frequency ranging from 2620 MHz to 2690 MHz; and the fourth passband range covers the transceiving frequency ranging from 1920 MHz to 2170 MHz.

In the apparatus 722 for sharing antenna and feeder, the first communication port is configured to connect the first antenna interface Div of the first base station 720; the second communication port is configured to connect the receiver RXD of the first base station 720; the third communication port is configured to connect the first antenna and feeder sharing interface Div Ex1 of the first base station 720; the first antenna and feeder sharing interface Div Ex1 is configured to connect the first antenna interface Div of the second base station 730; the fifth communication port is configured to connect the second antenna and feeder sharing interface Div Ex2 of the first base station 720; the second antenna and feeder sharing interface Div Ex2 is configured to connect the first antenna interface Div of the third base station 710. In the apparatus 722 for sharing antenna and feeder, the first frequency selecting unit is connected between the first communication port and the second communication port in series and configured to filter signals transmitted between the first communication port and the second communication port according to the first passband range; the second frequency selecting unit is connected between the first communication port and the third communication port in series and configured to filter signals transmitted between the first communication port and the third communication port according to the second passband range; the fourth frequency selecting unit is connected between the first communication port and the fifth communication port in series and configured to filter signals transmitted between the first communication port and the fifth communication port according to the fourth passband range.

In the apparatus 721 for sharing antenna and feeder, the first communication port is configured to connect the second antenna interface Main of the first base station 720; the second communication port is configured to connect the receiver RXM of the first base station 720; the third communication port is configured to connect the third antenna and feeder sharing interface Main Ex1 of the first base station 720, where the third antenna and feeder sharing interface Main Ex1 is configured to connect the second antenna interface Main of the second base station 730; the fourth communication port is configured to connect the transmitter TX of the first base station 720; the fifth communication port is configured to connect the fourth antenna and feeder sharing interface Main Ex2 of the first base station 720, where the fourth antenna and feeder sharing interface Main Ex2 is configured to connect the second antenna interface Main of the third base station 710. In the apparatus 722 for sharing antenna and feeder, the first frequency selecting unit is connected between the first communication port and the second communication port in series and configured to filter signals transmitted between the first communication port and the second communication port according to the first passband range; the second frequency selecting unit is connected between the first communication port and the third communication port in series and configured to filter signals transmitted between the first communication port and the third communication port according to the second passband range; the third frequency selecting unit is connected between the first communication port and the fourth communication port in series and configured to filter signals transmitted between the first communication port and the fourth communication port according to the third passband range; the fourth frequency selecting unit is connected between the first communication port and the fifth communication port in series and configured to filter signals transmitted between the first communication port and the fifth communication port according to the fourth passband range. The way of processing signals between the first base station 720 and the second base station 730 and between the first base station 720 and the third base station 710 is similar to that shown in FIG. 4, and is not further described.

In this embodiment, in the first base station 720, four antenna and feeder sharing interfaces and the passband ranges of the apparatus for sharing antenna and feeder are set. In this way, three base stations in different frequency bands share antennas. It is understandable that more antenna and feeder sharing interfaces may be added to enable more base stations in different frequency bands to share antennas.

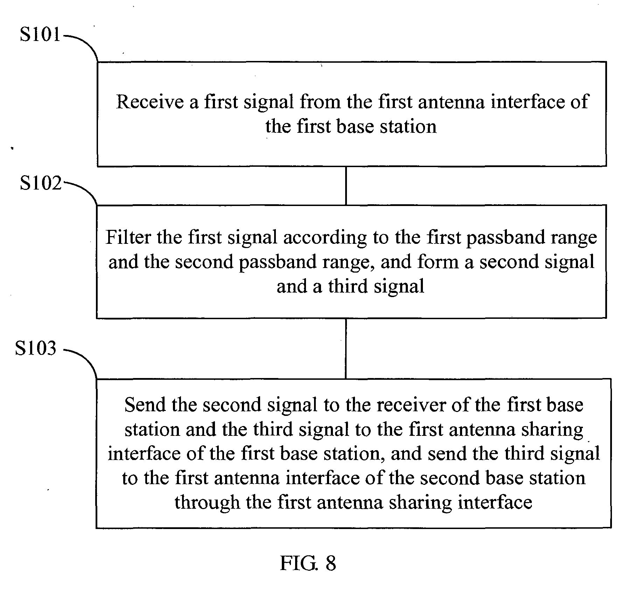

As shown in FIG. 8, a method for sharing antenna and feeder in an embodiment of the present invention includes the following steps:
Step S101: Receive a first signal from the first antenna interface of the first base station.
Step S102: Filter the first signal according to the first passband range and the second passband range, and form a second signal and a third signal.
Step S103: Send the second signal to the receiver of the first base station and the third signal to the first antenna and feeder sharing interface of the first base station, and send the third signal to the first antenna interface of the second base station through the first antenna and feeder sharing interface.

The first passband range covers the receiving frequency of the first base station, the second passband range covers the transceiving frequency of the second base station, and the first passband range and the second passband range are not mutually overlapped.

The method may further include the following steps:
1: Receive a fourth signal from the transmitter of the first base station, and filter the fourth signal according to the third passband range.
2: Send the filtered fourth signal to the first antenna interface of the first base station.

The third passband range covers the transmitting frequency of the first base station, and the third passband range, the first passband range, and the second passband range are not mutually overlapped.

The preceding steps may be executed before or after step S101.

The method may further include the following steps:
1: Receive a fifth signal from the transmitter of the second base station through the first antenna and feeder sharing interface.
2: Filter the fifth signal according to the second passband range.
3: Send the filtered fifth signal to the first antenna interface of the first base station.

The preceding steps may be executed before or after step S101.

In embodiments of the present invention, frequency selecting units that cover the transceiving frequencies of other base stations and corresponding antenna and feeder sharing interfaces are set in a base station. In this way, these base stations can share the antennas and feeders without using additional ASUs, and thus the feeders are saved and the construction difficulty is lowered.

Through the descriptions of the preceding embodiments, those skilled in the art may understand that the present invention may be implemented by hardware only or by software and a necessary universal hardware platform. Based on such understandings, the technical solution under the present invention may be embodied in the form of a software product. The software product may be stored in a nonvolatile storage medium, which can be a compact disk read-only memory (CD-ROM), a USB disk, or a removable hard disk. The software product includes a number of instructions that enable a computer device (personal computer, server, or network device) to execute the methods provided in the embodiments of the present invention.

The above descriptions are merely some exemplary embodiments of the present invention, but not intended to limit the scope of the present invention. Any modifications or variations that can be derived by those skilled in the art should fall within the scope of the present invention.

## Claims

1. A method for sharing antenna and feeder, wherein the method is performed by a first base station, and the first base station is connected with a second base station, **characterized in that** the method comprises:
filtering signals according to a first passband range; and
filtering signals according to a second passband range;
wherein the first passband range covers a receiving frequency of the first base station, the second passband range covers a transceiving frequency of the second base station, and the first passband range and the second passband range are not mutually overlapped.

2. The method according to claim 1, further comprising:
filtering signals according to a third passband range;
wherein the third passband range covers a transmitting frequency of the first base station, and the third passband range, the first passband range, and the second passband range are not mutually overlapped.

3. The method according to claim 1, further comprising
filtering signals according to a fourth passband range;
wherein the fourth passband range covers a transceiving frequency of a third base station, and the fourth passband range, the first passband range, and the second passband range are not mutually overlapped.

4. The method according to claim 2, further comprising:
filtering signals according to a fourth passband range;
wherein the fourth passband range covers a transceiving frequency of a third base station, and the fourth passband range, the first passband range, the second passband range, and the third passband range are not mutually overlapped.

5. An apparatus for sharing antenna and feeder, **characterized in that** the apparatus comprises:
means for receiving a first signal from a first antenna interface of a first base station;
means for filtering the first signal according to a first passband range and a second passband range, and forming a second signal and a third signal; and
means for sending the second signal to a receiver of the first base station and the third signal to a first antenna and feeder sharing interface of the first base station, and sending the third signal to a first antenna interface of a second base station through the first antenna and feeder sharing interface;
wherein the first passband range covers a receiving frequency of the first base station, the second passband range covers a transceiving frequency of the second base station, and the first passband range and the second passband range are not overlapped.

6. The apparatus according to claim 5, further comprising:
means for receiving a fourth signal from a transmitter of the first base station, and filtering the fourth signal according to a third passband range; and
means for sending the filtered fourth signal to the first antenna interface of the first base station;
wherein the third passband range covers a transmitting frequency of the first base station, and the third passband range, the first passband range, and the second passband range are not mutually overlapped.

7. The apparatus according to claim 5, further comprising:
means for receiving a fifth signal from a transmitter of the second base station through the first antenna and feeder sharing interface;
means for filtering the fifth signal according to the second passband range; and
means for sending the filtered fifth signal to the first antenna interface of the first base station.

8. A machine-readable storage medium having stored thereon, a computer program comprising at least one code section for distributing data, the at least one code section being executable by a machine in a first base station for causing the machine to perform acts of:
filtering signals according to a first passband range; and
filtering signals according to a second passband range;
wherein the first passband range covers a receiving frequency of the first base station, the second passband range covers a transceiving frequency of a second base station, and the first passband range and the second passband range are not mutually overlapped.

9. The machine-readable storage medium of claim 8, wherein the at least one code section being executable by the machine for causing the machine to perform further an act of:
filtering signals according to a third passband range;
wherein the third passband range covers a transmitting frequency of the first base station, and the third passband range, the first passband range, and the second passband range are not mutually overlapped.

10. The machine-readable storage medium of claim 8, wherein the at least one code section being executable by the machine for causing the machine to perform further an act of:
filtering signals according to a fourth passband range;
wherein the fourth passband range covers a transceiving frequency of a third base station, and the fourth passband range, the first passband range, and the second passband range are not mutually overlapped.

11. The machine-readable storage medium of claim 9, wherein the at least one code section being executable by the machine for causing the machine to perform further an act of:
filtering signals according to a fourth passband range;
wherein the fourth passband range covers a transceiving frequency of a third base station, and the fourth passband range, the first passband range, the second passband range, and the third passband range are not mutually overlapped.

12. A machine-readable storage medium having stored thereon, a computer program comprising at least one code section for distributing data, the at least one code section being executable by a machine for causing the machine to perform acts of:
receiving a first signal from a first antenna interface of a first base station;
filtering the first signal according to a first passband range and a second passband range, and forming a second signal and a third signal; and
sending the second signal to a receiver of the first base station and the third signal to a first antenna and feeder sharing interface of the first base station, and sending the third signal to a first antenna interface of a second base station through the first antenna and feeder sharing interface;
wherein the first passband range covers a receiving frequency of the first base station, the second passband range covers a transceiving frequency of the second base station, and the first passband range and the second passband range are not overlapped.

13. The machine-readable storage medium of claim 12, wherein the at least one code section being executable by the machine for causing the machine to perform further acts of:
receiving a fourth signal from a transmitter of the first base station, and filtering the fourth signal according to a third passband range; and
sending the filtered fourth signal to the first antenna interface of the first base station;
wherein the third passband range covers a transmitting frequency of the first base station, and the third passband range, the first passband range, and the second passband range are not mutually overlapped.

14. The machine-readable storage medium of claim 12, wherein the at least one code section being executable by the machine for causing the machine to perform further acts of:
receiving a fifth signal from a transmitter of the second base station through the first antenna and feeder sharing interface;
filtering the fifth signal according to the second passband range; and
sending the filtered fifth signal to the first antenna interface of the first base station.

## Patentansprüche

1. Verfahren zur gemeinsamen Nutzung einer Antenne und einer Zuleitung, wobei das Verfahren durch eine erste Basisstation ausgeführt wird und die erste Basisstation mit einer zweiten Basisstation verbunden ist, **dadurch gekennzeichnet, dass** das Verfahren Folgendes umfasst:
Filtern von Signalen gemäß einem ersten Durchlassbandbereich; und
Filtern von Signalen gemäß einem zweiten Durchlassbandbereich;
wobei der erste Durchlassbandbereich eine Empfangsfrequenz der ersten Basisstation abdeckt, der zweite Durchlassbandbereich eine Sendeempfangsfrequenz der zweiten Basisstation abdeckt und sich der erste Durchlassbandbereich und der zweite Durchlassbandbereich gegenseitig nicht überlappen.

2. Verfahren nach Anspruch 1, das ferner Folgendes umfasst:
Filtern von Signalen gemäß einem dritten Durchlassbandbereich;
wobei der dritte Durchlassbandbereich eine Sendefrequenz der ersten Basisstation abdeckt und sich der dritte Durchlassbandbereich, der erste Durchlassbandbereich und der zweite Durchlassbandbereich nicht gegenseitig überlappen.

3. Verfahren nach Anspruch 1, das ferner Folgendes umfasst:
Filtern von Signalen gemäß einem vierten Durchlassbandbereich;
wobei der vierte Durchlassbandbereich eine Sendeempfangsfrequenz einer dritten Basisstation abdeckt und sich der vierte Durchlassbandbereich, der erste Durchlassbandbereich und der zweite Durchlassbandbereich nicht gegenseitig überlappen.

4. Verfahren nach Anspruch 2, das ferner Folgendes umfasst:
Filtern von Signalen gemäß einem vierten Durchlassbandbereich;
wobei der vierte Durchlassbandbereich eine Sendeempfangsfrequenz einer dritten Basisstation abdeckt und sich der vierte Durchlassbandbereich, der erste Durchlassbandbereich, der zweite Durchlassbandbereich und der dritte Durchlassbandbereich nicht gegenseitig überlappen.

5. Vorrichtung zur gemeinsamen Nutzung einer Antenne und einer Zuleitung, **dadurch gekennzeichnet, dass** die Vorrichtung Folgendes umfasst:
Mittel zum Empfangen eines ersten Signals von einer ersten Antennenschnittstelle einer ersten Basisstation;
Mittel zum Filtern des ersten Signals gemäß einem ersten Durchlassbandbereich und einem zweiten Durchlassbandbereich und Bilden eines zweiten Signals und eines dritten Signals; und
Mittel zum Senden des zweiten Signals zu einem Empfänger der ersten Basisstation und des dritten Signals zu einer ersten gemeinsam genutzten Antennen- und Zuleitungsschnittstelle der ersten Basisstation und Senden des dritten Signals über die erste gemeinsam genutzte Antennen- und Zuleitungsschnittstelle zu einer ersten Antennenschnittstelle einer zweiten Basisstation;
wobei der erste Durchlassbandbereich eine Empfangsfrequenz der ersten Basisstation abdeckt, der zweite Durchlassbandbereich eine Sendeempfangsfrequenz der zweiten Basisstation abdeckt und sich der erste Durchlassbandbereich und der zweite Durchlassbandbereich nicht überlappen.

6. Vorrichtung nach Anspruch 5, die ferner Folgendes umfasst:
Mittel zum Empfangen eines vierten Signals von einem Sender der ersten Basisstation und Filtern des vierten Signals gemäß einem dritten Durchlassbandbereich; und
Mittel zum Senden des gefilterten vierten Signals zu der ersten Antennenschnittstelle der ersten Basisstation;
wobei der dritte Durchlassbandbereich eine Sendefrequenz der ersten Basisstation abdeckt und sich der dritte Durchlassbandbereich, der erste Durchlassbandbereich und der zweite Durchlassbandbereich nicht gegenseitig überlappen.

7. Vorrichtung nach Anspruch 5, die ferner Folgendes umfasst:
Mittel zum Empfangen eines fünften Signals von einem Sender der zweiten Basisstation über die erste gemeinsam genutzte Antennen- und Zuleitung s schnitt stelle;
Mittel zum Filtern des fünften Signals gemäß dem zweiten Durchlassbandbereich; und
Mittel zum Senden des gefilterten fünften Signals zu der ersten Antennenschnittstelle der ersten Basisstation.

8. Maschinenlesbares Speichermedium, das darauf gespeichert ein Computerprogramm aufweist, das wenigstens einen Codeabschnitt zum Verteilen von Daten umfasst, wobei der wenigstens eine Codeabschnitt durch eine Maschine in einer ersten Basisstation ausführbar ist, um zu bewirken, dass die Maschine folgende Vorgänge ausführt:
Filtern von Signalen gemäß einem ersten Durchlassbandbereich; und
Filtern von Signalen gemäß einem zweiten Durchlassbandbereich;
wobei der erste Durchlassbandbereich eine Empfangsfrequenz der ersten Basisstation abdeckt, der zweite Durchlassbandbereich eine Sendeempfangsfrequenz einer zweiten Basisstation abdeckt und sich der erste Durchlassbandbereich und der zweite Durchlassbandbereich nicht gegenseitig überlappen.

9. Maschinenlesbares Speichermedium nach Anspruch 8, wobei der wenigstens eine Codeabschnitt durch die Maschine ausführbar ist, um zu bewirken, dass die Maschine ferner den folgenden Vorgang ausführt:
Filtern von Signalen gemäß einem dritten Durchlassbandbereich;
wobei der dritte Durchlassbandbereich eine Sendefrequenz der ersten Basisstation abdeckt und sich der dritte Durchlassbandbereich, der erste Durchlassbandbereich und der zweite Durchlassbandbereich nicht gegenseitig überlappen.

10. Maschinenlesbares Speichermedium nach Anspruch 8, wobei der wenigstens eine Codeabschnitt durch die Maschine ausführbar ist, um zu bewirken, dass die Maschine ferner den folgenden Vorgang ausführt:
Filtern von Signalen gemäß einem vierten Durchlassbandbereich;
wobei der vierte Durchlassbandbereich eine Sendeempfangsfrequenz einer dritten Basisstation abdeckt und sich der vierte Durchlassbandbereich, der erste Durchlassbandbereich und der zweite Durchlassbandbereich nicht gegenseitig überlappen.

11. Maschinenlesbares Speichermedium nach Anspruch 9, wobei der wenigstens eine Codeabschnitt durch die Maschine ausführbar ist, um zu bewirken, dass die Maschine ferner den folgenden Vorgang ausführt:
Filtern von Signalen gemäß einem vierten Durchlassbandbereich;
wobei der vierte Durchlassbandbereich eine Sendeempfangsfrequenz einer dritten Basisstation abdeckt und sich der vierte Durchlassbandbereich, der erste Durchlassbandbereich, der zweite Durchlassbandbereich und der dritte Durchlassbandbereich nicht gegenseitig überlappen.

12. Maschinenlesbares Speichermedium, das darauf gespeichert ein Computerprogramm aufweist, das wenigstens einen Codeabschnitt zum Verteilen von Daten umfasst, wobei der wenigstens eine Codeabschnitt durch eine Maschine ausführbar ist, um zu bewirken, dass die Maschine folgende Vorgänge ausführt:
Empfangen eines ersten Signals von einer ersten Antennenschnittstelle einer ersten Basisstation;
Filtern des ersten Signals gemäß einem ersten Durchlassbandbereich und einem zweiten Durchlassbandbereich und Bilden eines zweiten Signals und eines dritten Signals; und
Senden des zweiten Signals zu einem Empfänger der ersten Basisstation und des dritten Signals zu einer ersten gemeinsam genutzten Antennen- und Zuleitungsschnittstelle der ersten Basisstation und Senden des dritten Signals über die erste gemeinsam genutzte Antennen- und Zuleitungsschnittstelle zu einer ersten Antennenschnittstelle einer zweiten Basisstation;
wobei der erste Durchlassbandbereich eine Empfangsfrequenz der ersten Basisstation abdeckt, der zweite Durchlassbandbereich eine Sendeempfangsfrequenz der zweiten Basisstation abdeckt und sich der erste Durchlassbandbereich und der zweite Durchlassbandbereich nicht überlappen.

13. Maschinenlesbares Speichermedium nach Anspruch 12, wobei der wenigstens eine Codeabschnitt durch die Maschine ausführbar ist, um zu bewirken, dass die Maschine ferner folgende Vorgänge ausführt:
Empfangen eines vierten Signals von einem Sender der ersten Basisstation und Filtern des vierten Signals gemäß einem dritten Durchlassbandbereich; und
Senden des gefilterten vierten Signals zu der ersten Antennenschnittstelle der ersten Basisstation;
wobei der dritte Durchlassbandbereich eine Sendefrequenz der ersten Basisstation abdeckt und sich der dritte Durchlassbandbereich, der erste Durchlassbandbereich und der zweite Durchlassbandbereich nicht gegenseitig überlappen.

14. Maschinenlesbares Speichermedium nach Anspruch 12, wobei der wenigstens eine Codeabschnitt durch die Maschine ausführbar ist, um zu bewirken, dass die Maschine ferner folgende Vorgänge ausführt:
Empfangen eines fünften Signals von einem Sender der zweiten Basisstation über die erste gemeinsam genutzte Antennen- und Zuleitungsschnittstelle;
Filtern des fünften Signals gemäß dem zweiten Durchlassbandbereich; und
Senden des gefilterten fünften Signals zu der ersten Antennenschnittstelle der ersten Basisstation.

## Revendications

1. Procédé destiné à partager une antenne et une source, où le procédé est exécuté par une première station de base, et la première station de base est connectée à une seconde station de base, **caractérisé en ce que** le procédé comprend les étapes suivantes :
filtrer des signaux conformément à une première bande passante ; et
filtrer des signaux conformément à une deuxième bande passante ;
où la première bande passante couvre une fréquence de réception de la première station de base, la deuxième bande passante couvre une fréquence d'émission-réception de la deuxième station de base, et la première bande passante et la deuxième bande passante ne se chevauchent pas mutuellement.

2. Procédé selon la revendication 1, comprenant en outre l'étape suivante :
filtrer des signaux conformément à une troisième bande passante ;
où la troisième bande passante couvre une fréquence d'émission de la première station de base, et la troisième bande passante, la première bande passante et la deuxième bande passante ne se chevauchent pas mutuellement.

3. Procédé selon la revendication 1, comprenant en outre l'étape suivante :
filtrer des signaux conformément à une quatrième bande passante ;
où la quatrième bande passante couvre une fréquence d'émission-réception d'une troisième station de base, et la quatrième bande passante, la première bande passante et la deuxième bande passante ne se chevauchent pas mutuellement.

4. Procédé selon la revendication 2, comprenant en outre l'étape suivante :
filtrer des signaux conformément à une quatrième bande passante ;
où la quatrième bande passante couvre une fréquence d'émission-réception d'une troisième station de base, et la quatrième bande passante, la première bande passante,
la deuxième bande passante, et la troisième bande passante ne se chevauchent pas mutuellement.

5. Appareil destiné à partager une antenne et une source, **caractérisé en ce que** l'appareil comprend :
un moyen pour recevoir un premier signal d'une première interface d'antenne d'une première station de base ;
un moyen pour filtrer le premier signal conformément à une première bande passante et à une deuxième bande passante, et pour former un deuxième signal et un troisième signal ; et
un moyen pour envoyer le deuxième signal à un récepteur de la première station de base et le troisième signal à une première interface de partage d'antenne et de source de la première station de base, et pour envoyer le troisième signal à une première interface d'antenne d'une deuxième station de base par l'intermédiaire de la première interface de partage d'antenne et de source ;
où la première bande passante couvre une fréquence de réception de la première station de base, la deuxième bande passante couvre une fréquence d'émission-réception de la deuxième station de base, et la première bande passante et la deuxième bande passante ne se chevauchent pas.

6. Appareil selon la revendication 5, comprenant en outre :
un moyen pour recevoir un quatrième signal en provenance d'un émetteur de la première station de base, et pour filtrer le quatrième signal conformément à une troisième bande passante ; et
un moyen pour envoyer le quatrième signal filtré à la première interface d'antenne de la première station de base ;
où la troisième bande passante couvre une fréquence d'émission de la première station de base, et la troisième bande passante, la première bande passante et la deuxième bande passante ne se chevauchent pas mutuellement.

7. Appareil selon la revendication 5, comprenant en outre :
un moyen pour recevoir un cinquième signal en provenance d'un émetteur de la deuxième station de base par l'intermédiaire de la première interface de partage d'antenne et de source ;
un moyen pour filtrer le cinquième signal conformément à la deuxième bande passante ; et
un moyen pour envoyer le cinquième signal filtré à la première interface d'antenne de la première station de base.

8. Support de stockage lisible par une machine sur lequel est stocké un programme informatique comprenant au moins une section de code destinée à distribuer des données, l'au moins une section de code étant exécutable par une machine dans une première station de base pour amener la machine à exécuter les actions suivantes :
filtrer des signaux conformément à une première bande passante ; et
filtrer des signaux conformément à une deuxième bande passante ;
où la première bande passante couvre une fréquence de réception de la première station de base, la deuxième bande passante couvre une fréquence d'émission-réception d'une deuxième station de base, et la première bande passante et la deuxième bande passante ne se chevauchent pas mutuellement.

9. Support de stockage lisible par une machine selon la revendication 8, dans lequel l'au moins une section de code est exécutable par la machine pour amener la machine à exécuter en outre l'action suivante :
filtrer des signaux conformément à une troisième bande passante ;
où la troisième bande passante couvre une fréquence d'émission de la première station de base, et la troisième bande passante, la première bande passante et la deuxième bande passante ne se chevauchent pas mutuellement.

10. Support de stockage lisible par une machine selon la revendication 8, dans lequel l'au moins une section de code est exécutable par la machine pour amener la machine à exécuter en outre l'action suivante :
filtrer des signaux conformément à une quatrième bande passante ;
où la quatrième bande passante couvre une fréquence d'émission-réception d'une troisième station de base, et la quatrième bande passante, la première bande passante et la deuxième bande passante ne se chevauchent pas mutuellement.

11. Support de stockage lisible par une machine selon la revendication 9, dans lequel l'au moins une section de code est exécutable par la machine pour amener la machine à exécuter en outre l'action suivante :
filtrer des signaux conformément à une quatrième bande passante ;
où la quatrième bande passante couvre une fréquence d'émission-réception d'une troisième station de base, et la quatrième bande passante, la première bande passante,
la deuxième bande passante, et la troisième bande passante ne se chevauchent pas mutuellement.

12. Support de stockage lisible par une machine sur lequel est stocké un programme informatique comprenant au moins une section de code pour distribuer des données, l'au moins une section de code étant exécutable par une machine pour amener la machine à exécuter les actions suivantes :
recevoir un premier signal d'une première interface d'antenne d'une première station de base ;
filtrer le premier signal conformément à une première bande passante et à une deuxième bande passante, et former un deuxième signal et un troisième signal ; et
envoyer le deuxième signal à un récepteur de la première station de base et le troisième signal à une première interface de partage d'antenne et de source de la première station de base, et envoyer le troisième signal à une première interface d'antenne d'une deuxième station de base par l'intermédiaire de la première interface de partage d'antenne et de source ;
où la première bande passante couvre une fréquence de réception de la première station de base, la deuxième bande passante couvre une fréquence d'émission-réception de la deuxième station de base, et la première bande passante et la deuxième bande passante ne se chevauchent pas.

13. Support de stockage lisible par une machine selon la revendication 12, dans lequel l'au moins une section de code est exécutable par la machine pour amener la machine à exécuter en outre les actions suivantes :
recevoir un quatrième signal en provenance d'un émetteur de la première station de base, et filtrer le quatrième signal conformément à une troisième bande passante ; et
envoyer le quatrième signal filtré à la première interface d'antenne de la première station de base ;
où la troisième bande passante couvre une fréquence d'émission de la première station de base, et la troisième bande passante, la première bande passante et la deuxième bande passante ne se chevauchent pas mutuellement.

14. Support de stockage lisible par une machine selon la revendication 12, dans lequel l'au moins une section de code est exécutable par la machine pour amener la machine à exécuter en outre les actions suivantes :
recevoir un cinquième signal en provenance d'un émetteur de la deuxième station de base par l'intermédiaire de la première interface de partage d'antenne et de source ;
filtrer le cinquième signal conformément à la deuxième bande passante ; et
envoyer le cinquième signal filtré à la première interface d'antenne de la première station de base.
